(19) Europäisches Patentamt
European Patent Office
Office européen des brevets

(11) Publication number : **0 507 565 A1**

# (12) EUROPEAN PATENT APPLICATION

(21) Application number : **92302863.3**

(51) Int. Cl.[5] : **C07F 7/08**, A01N 55/00

(22) Date of filing : **01.04.92**

(30) Priority : **02.04.91 JP 96343/91**

(43) Date of publication of application :
**07.10.92 Bulletin 92/41**

(84) Designated Contracting States :
**DE FR GB**

(71) Applicant : **SHIN-ETSU CHEMICAL CO., LTD.**
**6-1, Ohtemachi 2-chome**
**Chiyoda-ku Tokyo (JP)**

(71) Applicant : **RIKAGAKU KENKYUSHO**
**2-1 Hirosawa**
**Wako-shi Saitama-ken (JP)**

(72) Inventor : **Yagihashi, Fujio**
**101, 28-1, 1-chome, Aobadai, Midori-ku**
**Yokohama-shi, Kanagawa-ken (JP)**
Inventor : **Kamuro, Yasuo**
**15-16, 2-chome, Hanaike**
**Ichinomiya-shi, Aichi-ken (JP)**
Inventor : **Yoshioka, Hirosuke**
**4-14-24-1004, Koishikawa, Bunkyo-ku**
**Tokyo (JP)**
Inventor : **Furihata, Tomoyoshi**
**9-2-18, Arima, Miyamae-ku**
**Kawasaki-shi, Kanagawa-ken (JP)**
Inventor : **Takamizawa, Minoru**
**4-8-21, Kitazawa, Setagaya-ku**
**Tokyo (JP)**

(74) Representative : **Votier, Sidney David et al**
**CARPMAELS & RANSFORD 43, Bloomsbury Square**
**London WC1A 2RA (GB)**

(54) **Silane compound having plant growth regulating activities and plant growth regulator containing the same.**

(57) A cyclic aminoalkylsilane having the general formula (1) :

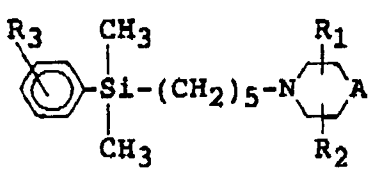

(1)

wherein $R_1$ and $R_2$ may be the same or different and each are a hydrogen atom or a methyl group, $R_3$ is a chlorine atom or a trifluoromethyl group, A stands for $-CH_2-$, $-CH_2CH_2-$, $-CH(CH_3)-$, -O- or a single bond. The compound above has biological activities that enable the control of growth of plant bodies and hence is useful as a plant growth regulator which can be used in production of field crops and garden crops, and improvement in environment.



Jouve, 18, rue Saint-Denis, 75001 PARIS

## BACKGROUND OF THE INVENTION

### 1. Field of the Invention

The present invention relates to a novel silane compound and a plant growth regulator for use in production of field crops and garden crops.

### 2. Description of Prior Art

In regard to alkanes having a cyclic amino group at one terminal end and a substituted silyl group at the other terminal end, compounds with 3 or less carbon atoms in the alkane moiety are known, For example, European Patent Publication No. 241 429 A2 discloses as such compounds with one carbon atom the compounds represented by the formulas:

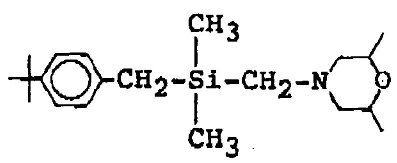
,
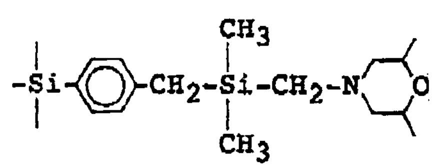

and

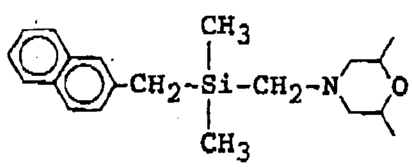
.

European Patent Publication No. 313 353 A1 discloses the compounds represented by the formulas:

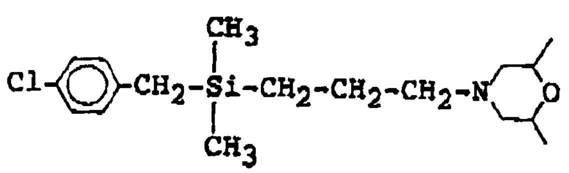
,

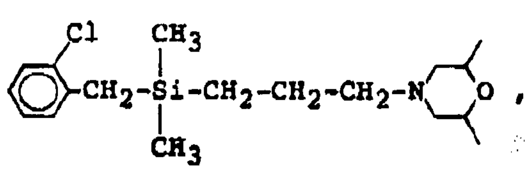
,

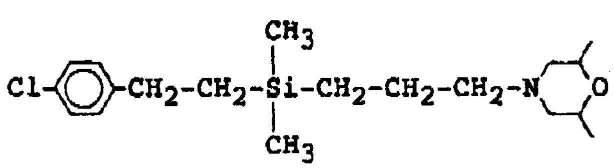
,

and

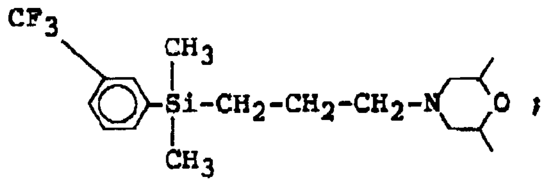

and also discloses as a compound with 4 carbon atoms the compound represented by the formula:

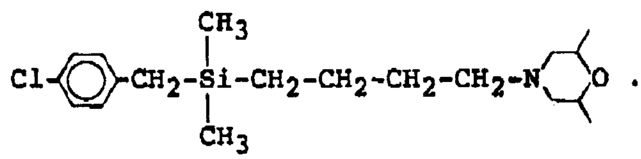

However, any compounds are not known that have 5 carbon atoms in the alkane moiety located between a cyclic amino group and a substituted silyl group.

SUMMARY OF THE INVENTION

The inventors of the present invention have succeeded in the creation of the compound that has 5 carbon atoms in the alkane moiety located between a cyclic amino group and a substituted silyl group, represented by the general formula (1) given later, and studied on the biological activities of the compound. Consequently, the inventors have found that the compound has biological activities which enable the control of growth of plant bodies and therefore the compound is useful in the production of field or garden crops and improvement in environment.

Cyclic aminoalkylsilane

Thus, according to the present invention, there is provided a cyclic aminoalkylsilane having the general formula (1):

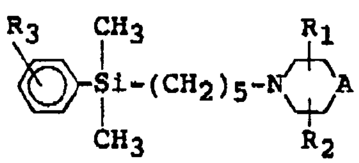

(1)

wherein $R_1$ and $R_2$ may be the same or different and each are a hydrogen atom or a methyl group, $R_3$ is a chlorine atom or a trifluoromethyl group, A stands for $-CH_2-$, $-CH_2CH_2-$, $-CH(CH_3)-$, -O- or a single bond.

The novel cyclic aminoalkylsilane represented by the general formula (1) has biological activities that enable the control of growth of plant bodies and hence is useful as a plant growth regulator which can be used in production of field crops and garden crops, and improvement in environment.

In the compounds represented by the general formula (1), the substituted phenyl group located at the left terminal end includes, for example, p-chlorophenyl, m-chlorophenyl, p-trifluoromethylphenyl, m-trifluoromethylphenyl, and o-trifluoromethylphenyl. The hetero ring constituting the cyclic amino group located at the right terminal end includes, for example, the pyrrolidine ring, piperidine ring, perhydroazepine ring and morpholine ring, according to the divalent group A. Examples of the cyclic amino group at the right terminal end include the piperidino group, 2-methylpiperidino group, 3-methylpiperidino group, 4-methylpiperidino group, 2,6-dimethylpiperidino group, 3,5-dimethylpiperidino group, 1-pyrrolidinyl group, 2-methyl-1-pyrrolidinyl group, 3-methyl-1-pyrrolidinyl group, 1-perhydroazepinyl group, morpholino group, and 2,6-dimethylmorpholino group.

Among the compounds represented by the general formula (1), preferred examples in view of the plant growth regulation include Compounds I to VI shown in Table 1 later.

Synthesis

The compound of the general formula (1) can be produced, for example, by the reaction of a compound represented by the general formula (2):

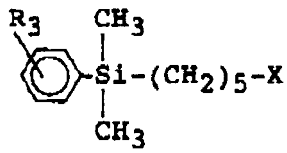

(2)

wherein $R_3$ is as defined above, and X is a halogen atom such as chlorine and bromine, or a slfonyloxy group represented by the formula: $R'SO_3$- where R′ stands for a methyl group, p-tolyl group or trifluoromethyl group, with a cyclic amine having the general formula (3):

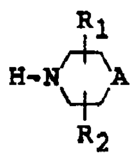

(3)

wherein $R_1$, $R_2$ and A are as defined above.

The compound of the general formula (2) wherein X is a halogen atom, can be obtained by converting a chloromethylsilane compound of the formula (4) into a corresponding organometallic compound such as an organolithium reagent or a Grignard reagent and then subjecting the organometallic compound to coupling with 1-bromo-4-chlorobutane, as shown in the equation:

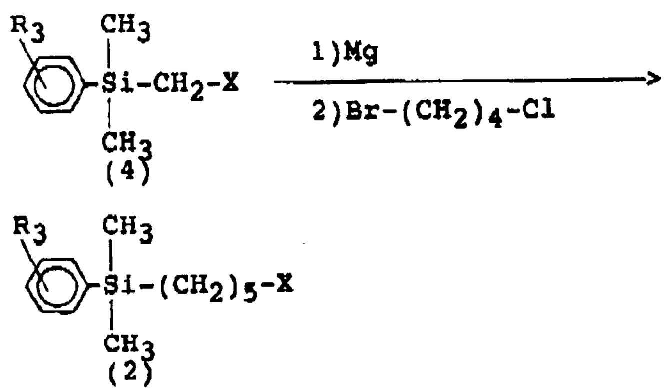


(4)

(2)

(Japanese Pre-examination Patent Publication (KOKAI) No. 2-270886(1990)).

The compound of the general formula (2) wherein X is a sulfonyloxy group, can be obtained, for example, by converting a pentane that has a halogen atom at one terminal end and a blocked hydroxyl group at the other terminal group into a Grignard reagent represented by the general formula (5):

$$RO\text{-}(CH_2)_5\text{-}MgX \qquad (5)$$

wherein R stands for a blocking group such as, e.g., the trimethysilyl group, ter-butyldimethylsilyl group or tetrahydropyranyl group, reacting the Grignard reagent with the chlorosilane represented by the formula (6):

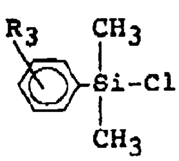

(6)

to produce a substituted hydroxypentylsilane represented by the general formula (7):

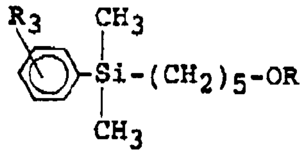 ,  (7)

hydrolyzing the silane of the formula (7) to produce a hydroxypentylsilane, and reacting the hydroxypentylsilane with, e.g., a sulfonyl chloride having the formula:

$$R'SO_3Cl$$

wherein R′ is as defined above.

The cyclic amines having the general formula (3) include, for example, pyrrolidine, 2-methylpyrrolidine, 3-methylpyrrolidine, piperidine, 2-methylpiperidine, 3-methylpiperidine, 4-methylpiperidine, 2,6-dimethylpiperidine, 3,5-dimethylpiperidine, per-hyddroazepine, morpholine, 2,6-dimethylmorpholine and the like.

The reaction between the compound of the general formula (2) and the cyclic amine of the general formula (3) can be generally performed under normal conditions of nucleophilic substitution reaction. Solvents used for the reaction include, for example, methanol, ethanol, isopropanol, butanol, acetone, methyl ethyl ketone, benzene, toluene, xylene, diethyl ether, tetrahydorfuran, dioxane, 1,2-dimethoxyethane, N,N-dimethylformamide, dimethylacetoamide, dimethyl sulfoxide and hexamethyl-phosphoric triamide, which may be used singly or as a mixed solvent of two or more. Reaction temperature is not particularly limited, but normally the reaction is carried out from room temperature to the boiling point of a solvent. Although the reaction can proceed under the conditions above, a catalyst may be optionally used as necessary. The catalysts which may used include, for example, sodium iodide, potassium iodide, tetra n-butyl ammonium bromide, tetrabutylammonium iodide, tetrabutylammonium hydrogensulfate, and crown ethers.

Plant growth regulator

The compound of the general formula (1) exhibits unique plant growth regulating effects which have not exhibited by any known compound, in particular the following effects of:

(1) inhibiting the growth and developent of plumules and suckers,
(2) inhibiting the elongation of plant length,
(3) shedding flower buds and flowers, and
(4) promoting the ripening of fruits.

The biological activities above are useful in the effective production and harvest of field crops and mechanization of the harvest, and provide great advantages.

Thus, the present invention also provides a plant growth regulator (hereinafter simply referred to "regulator") comprising the cyclic aminoalkylsilane represented by the general formula (1) as an active ingredient.

Specific applications are described below.

(a) The regulator of the present invention has the effect of inhibiting the growth of suckers of plants. In particular, when applied to tobacco, the regulator exhibits markedly strong bud-inhibiting activities. The regulator also has an effect of shedding flower buds. Therefore, the application of the regulator can markedly improve efficiency of cultivation operations.

That is, in cultivation of tobacco, topping operation is performed inevitably to prevent flower-setting and seed-setting, and therefore a lot of labor is required. This is because chemicals effective in exhibiting flower-setting or seed-setting have not been known. On the other hand, the topping promotes the growth of suckers. For prevention thereof, maleic hydrazide or the like has been put into practical use. The maleic hydrazide is effective in inhibiting the growth of suckers; however, it has no effects of shedding flower buds or withering flowers, makes flavor turn bad to lower the quality of tobacco, and is suspected of carcinogenesis. The compound of the general formula (1) of the present invention exhibits the effects together, and is high in safety.

(b) The regulator of the present invention can be sprayed to various crops other than tobacco to thereby shed flower buds or flowers; hence it is useful for mechanization of harvest of indefinite influorescence crops. Application by spray at a suitable time when seeds are being set, can shed flower buds and flowers only without influence on seeds under growth. This allows the seeds to ripe at the same time, and enables improvement in efficiency of cultivation and harvest and simultaneous mechanical harvest. The crops to which the regulator can be applied in such a manner include, for example, tomato, coffee and lint.

(c) The regulator of the present invention, where applied to plants the seed-setting of which has been completed, exhibits the effect of enhancing the coloration and Brix of the fruits. This effect is confirmed with

respect to kaki (Japanese persimon) and tomato and, and is expected to be brought about with respect to mikan (a mandarin orange).

(d) The regulator of the present invention, where applied to plants, exhibits an action of withering and shedding young buds and young leaves, although it has no action on matured leaves or stems. Some crops are difficult to harvest mechanically if leaves remain at the time of harvest. The use of the regulator of the invention enables the mechanical harvest. Such application is possible to beans such as soy bean and azuki bean (small red bean), and crops such as peanut, lint and tomato.

(e) The application of the regulator to a plant inhibits the growth of the bodies of the plant. Specifically, elongation of the plant lenght is inhibited. Such an action is expected to be used, e.g., to inhibit elongation of the plant length of bottom grass around normal roads and expressways and weed around railroad ties, and management of weed in the rough of or around golf courses.

Formulation

The compound of the general formula (1) neat may be used as the plant growth regulator. That is, the plant growth regulator may substantially consist of the compound of the general formula (1). However, the regulator may further contain a carrier to form a formulation so that it may be readily used. Generally, such a formulation is diluted as necessary before use. There is no particular limitation on the preparation of the formulation; therefore, the formulation can be prepared according to known methods for conventional agricultural chemicals.

For example, the compound of the general formula (1) as an active ingredient is mixed with a suitable carrier and, optionally, an inactive dispersing agent or a solvent intimately, and the resulting mixture is ground. A mixture of water, a dispersing agent and the active ingredient, i.e., wettable powders, pastes and emulsifiable concentrates, can be diluted with water to a desired concentration. These comprise the active ingredient and the carrier and, optionally, additives for stabilizing the active ingredient, a surface active agent, an anti-foaming agent and a solvent. The formulation of the present invention normally contains the compound of the general formula (1) as an active ingredient in an amount of 0.5% by weight to 80% by weight.

The wettable powder and the paste are obtainable by mixing and grinding the compound of the general formula (1) with a dispersing agent and carrier until an uniform matter is obtained.

The carriers which may be used suitably include, for example, kaolin, talc, cray, loess, chalk, lime, stone, granular coal, dolomite, diatomaceous earth, precipitated silica, silicates of alkaline earth metals, sodium silicate and aluminium potassium silicate (feldspars and mica), calcium sulfate, magnesium sulfate, powdered plastics, calsium carbonate, potassium chloride, potassium nitrate, nirocellulose and stanches, fertilizers such as, e.g., ammonium sulfate, ammonium phosphate and ammonium nitride, urea, vegetable matter such as, e.g., powdered cereals, powdered barks, powdered woods, powdered nut shells, powdered cellulose, plant residues and activated charcoal. These may be used singly or in combination of two or more.

The dispersing agents which may be used suitably, include, for example, condensation products of a sulfonated naphtaline or its derivatives with formaldehyde; condensation products of naphtaline or naphtalinesulfonic acid, a phenol and formaldehyde; alkali metal salts, ammonium salt and alkaline earth metal salts of lignin sulfonic acid, and alkylaryl sulfonates; alkali metal salts and alkaline earth metal salts of dibutylnaphtalinesulfonic acid; aliphatic alcohol sulfates; salts of hexadecanol sulfate, octadecanol sulfate and heptadecanol sulfate; salts of aliphatic alcohol glycol ethers, sodium salt of oleyl ethyonate, sodium salt of oleylmethyltaurine, di-tert-acetylenyl glycol, dialkyldilaurylammonium chloride; and alkali metal salts and alkaline earth metal salts of aliphatic acids.

To a mixture of these may be added, for example, additives for stabilizing the active gredient of the present invention, nonionic, anionic, anionic or cationic surface active agents for improving the adhesion of the active gredient to plants. As an adhesion improver may be used, for example, mixtures of oleic acid and lime, cellulose derivatives such as methylcellulose, hydroxyethyleneglycol mono- or dialkylphenol ethers having 5 to 15 ethylene oxide groups and containing 8 or 9 carbon atoms in alkyl moieties, alkali metal salts and alkaline earth metal salts thereof; polyethylene grycols (carbowaxes), aliphatic alcohol polyethylene glycol ethers having 5 to 20 ethylene oxide groups and containing 8 to 18 carbon atoms in the aliphatic alcohol moities.

In preparing a formulation, the compound of the general formula (1) is mixed with one or more additives described above, ground and then passed through a sieve so as to adjust the particle size of solid matter to 0.02 -0.04 mm in the case of wettable powders, or to 0.03 mm or below in the case of pastes.

In preparing an emulsifiable concentrate or paste, a dispersing agent, organic solvent and water as mentioned above are used. The solvents include, for example, alcohols, benzene, xylene, toluene, dimethyl sulfoxide, and mineral oil fractions with a boiling point of 120 to 350°C. The solvent to be used is required to have little odor, to be free of mineral poisons and to be inert to the compound of the general formula (1), and must be flammable.

The regulator may contain a light tolerance agent and anti-oxidizing agent.

The regulator of the present invention can be prepared in the form of a solution. To be used as a solution, the compound of the general formula (1) is dissolved in an organic solvent, a mixed solvent or water. The organic solvents include, for example, aliphatic hydrocarbons, aromatic hydrocarbons, halogenated derivatives thereof, alkylnaphtalenes or a mineral oil. These may be used singly or in combination of two or more. The solution thus prepared preferably contains the compound of the general formula (1) in a concentration of 1 to 20% by weight.

The solid formulations, e.g., dusts, sprays and granules, contain a solid carrier as mentioned above and optionally an additive for stabilizing the active ingredient. The particle size of the carrier is preferably about 0.1 mm or below in the case of dusts, about 0.075 to 0.2 mm in the case of sprays, and 0.2 mm or above in the case of granules. The solid formulation preferably contains the compound of the general formula (1) in a amount of 0.5 to 80% by weight.

The formulations thus prepared may be applied suitably according to the situation so that high effects may be obtained.

## EXAMPLES

The present invention will now be described in detail with reference to examples.

### Synthesis Example 1

From a suspension containing 2.40 g (98.7 mmol) of metallic magnesium in 50 ml of tetrahydrofuran (THF) and 21.6 g of 4-chlorophenylchloromethyldimethylsilane, in accordance with the conventional method, a solution of (4-chlorophenyldimethylsilyl) methylmagnesium chloride in THF was prepared. Separately, in a solution of 16.9 g (98.7 mmol) of 1-bromo-4-chlorobutane in 50 ml of THF are sufficiently dissolved under stirring, 100 mg of lithium chloride and 100 mg of cupric chloride. To the resulting solution of 1-bromo-4-chlorobutane, the Grignard solution as prepared above was added dropwise at room temperature over 30 minutes. After the resulting mixture was held at room temperature for another 2 hours, a solution of ammonium chloride in a diluted hydrochloric acid was added thereto, and then the mixture thus obtained was subjected to extraction with 50 ml of ethyl acetate twice. The extract obtained was dehydrated with anhydrous sodium sulfate, and was subjected to a reduced pressure to distill off the solvent. The residue obtained was distilled under a reduced pressure to obtain 18.3 g of 4-chlorophenyl-5-chloropentyldimethylsilane as a fraction of 160°C at 10 mmHg. Yield: 72%.

The results of NMR spectrometry and mass spectrometry for the compound obtained are given below.

MASS(m/e) 274($M^+$),259,204,189,169,(base)

$^1$H-NMR($C_6D_6$, δ, ppm)

0.257(6H,s),0.741(2H,m),1.339(2H,m),1.440(2H,m), 1.753(2H,m),3.501(2H,t,J=6.9Hz),7.34(2H,d,J=8.3Hz), 7.40 (2H,d,J=8.3Hz)

### Example 1

5-Piperidinopentyl-4-chlorophenyldimethylsilane

In a mixed solvent of 10ml of THF and 5ml of HMPA was dissolved 2.24 g (8.17 mmol) of 4-chlorophenyl-4-chloropentyldimethylsilane, and then 1.36 g (8.17 mmol) of potassium iodide and 1.39 g (16.34 mmol) of piperidine were added to the solution. The mixture obtained was stirred in a nitrogen atmosphere. While the mixture was subjected to reaction under reflux for 2 hours, the temperature rose from 70°C to 80°C. After cooling, 50 ml of ethyl acetate and 50 ml of water were added to the mixture, and the organic layer formed was separated. The solution obtained was washed with 50 ml of water three times, dehydrated with anhydrous sodium sulfate, and then distilled to remove the solvent, so that a yellowish liquid was obtained. The liquid was subjected to silica gel column chromatography to obtain 2.10 g of colorless oily 5-piperidinopentyl-4-chlorophenylsilane. Yield: 88%.

The results of analyses for the compound obtained are given below.

MASS(m/e) 323($M^+$),308,169,155,98(base)

$^1$H-NMR($CDCl_3$, δ, ppm)

0.23(6H,δ),0.65(2H,m),076(2H,m),1.41(4H,m), 1.42(4H,m),1.76(2H,q,J=8.3Hz),3.51(2H,t,J=6,8Hz), 7.34(2H, d,J=8.Hz),7.47(2H,d,J=8.3Hz)

$^{13}$C-NMR($CDCl_3$, δ, ppm)

-3.112,15.541,23.157,30.323,32.250,45.043,127.956, 134.874

Example 2

5-(1-pyrrolidinyl) pentyl-4-chlorophenyldimethylsilane

The procedure of Example 1 was repeated except that 1.16 g (16.34 mmol) of pyrrolidine was used in place of piperidine to obtain 1.98 g of 5-(1-pyrrolidinyl)pentyl-4-chlorophenydimethylsilane.Yield: 78%.

The results of analysis on this compound are given below.

MASS(m/e) 309($M^+$),294.98(base)

$^1$H-NMR($CDCl_3$, δ, ppm)

0.24(6H,s),0.73(2H,m),1.34(4H,m),1.48(2H,m), 1.77(4H,m),2.37(2H,m),2.25(4H,m),7.32(2H,m), 7.45(2H,m)

$^{13}$C-NMR($CDCl_3$, δ, ppm)

-3.060,15.539,23.383,23.740,28.739,31.523,54.242, 56.594,127.894,134.888,137.892

Synthesis Example 2

4-Trifluoromethylphenyl-5-chloropentyldimethylsilane

From a suspension containing 2.40 g (98.7 mmol) of metallic magnesium in 50 ml of tetrahydrofuran (THF) and 21.6 g of 4-trifluoromethylphenylchloromethyl-silane, in accordance with the conventional method, a solution of (4-trifluoromethylphenyldimethylsilyl) methyl-magnesium chloride in THF was prepared. Separately, in a solution of 16.9 g (98.7 mmol) of 1-bromo-4-chlorobutane in 50 ml of THF are sufficiently dissolved under stirring, 100 mg of lithium chloride and 100 mg of cupric chloride. To the resulting solution of 1-bromo-4-chlorobutane,the Grignard solution as prepared above was added dropwise at room temperature over 30 minutes. After the resulting mixture was held at room temperature for another, 2 hours, a solution of ammonium chloride in a diluted hydrochloric acid was added thereto, and then the mixture thus obtained was subjected to extraction with 50 ml of ethyl acetate twice. The extract obtained was dehydrated with anhydrous sodium sulfate,and was subjected to a reduced pressure to distill off the solvent. The residue obtained was distilled under a reducer pressure to obtain 18.3 g of 4-trifluoromethylphenyl-5-chloropentyldimethylsilane as a fraction with the boiling point of 110°C at 2 mmHg. Yield: 72%.

The results of analyses on the compound obtained are given below.

MASS(m/e) 308($M^+$),293,289,238,225,203(base)

Example 3

5-(1-piperidino)pentyl-4-trifluoromethylphenyldimethylsilane

The procedure of Example 1 was repeated except that 4-trifluoromethylphenyl-5-chloropentyldimetylsilane obtained in Synthesis Example 2 was used in place of 4-chlorophenyl-4-chlorobutyldimethylsilane to obtain 5-piperidinopentyl-4-trifluoromethylphenyldimethylsilane. Yield: 93%

The results of analysis on this compound are given below.

MASS(m/e) 357($M^+$),342,203(base)

$^1$H-NMR($CDCl_3$, δ, ppm)

0.27(6H,m),0.76(2H,m),1.30(2H,m),1.44(2H,m), 1.58(2H,m),2.24(2H,m),2.35(4H,m),7.59(4H,m)

$^{13}$C-NMR($CDCl_3$, δ, ppm)

-3,205,15.350,23.694,24.506,26,008,26.569,31.500, 54.652,59.515,124.139,124.176,133.780

Example 4

5-(1-pyrrolidinyl)pentyl-4-trifluoromethylphenyldimethylsilane

The procedure of Example 2 was repeated except that 4-trifluoromethylphenyl-5-chloropentyldimethylsilane obtained in Synthesis Example 2 was used in place of 4-chlorophenyl-4-chlorobutyldimethylsilane to obtain 5-(1-pyrrolidinyl) pentyl-4-trifluoromethylphenyldimethysilane.Yield: 91%.

The results of analysis on this compound are given below.

MASS(m/e) 345($M^+$),328,203(base)

$^1$H-NMR($CDCl_3$ , δ, ppm)

0.25(6H,m),0.77(2H,m),1.33(4H,m),1.48(2H,m), 1.73(4H,m),2.38(2H,m),2.45(2H,m),7.59(4H,m)

$^{13}$C-NMR($CDCl_3$, δ, ppm)

-3.205,15.342,23.376,23.694,28.708,31.492,54.235, 56.564,124.139,124.176,133.780

Example 5

5-(1-perhydroazepinyl)pentyl-4-trifluoromethylphenyldimethylsilane

The procedure of Example 3 was repeated except that perhydroazepine was used in place of piperidine to obtain 5-(1-perhydroazepinyl) pentyl-4-trifluoromethylphenyldimethylsilane. Yield: 83%.

The results of analysis on this compound are given below.

MASS(m/e) 373($M^+$),356,203(base)

$^1$H-NMR($CDCl_3$, δ, ppm)

0.28(6H,s),0.77(2H,m),1.30(4H,m),1.45(2H,m), 1.6 (6H,m),2.40(2H,m),2.59(4H,m),7.60(4H,m)

$^{13}$C-NMR($CDCl_3$, δ, ppm)

-3.205,15.403,23.709,26.986,27.176,27.950,31.409, 55.570,58.248,124.14,133.780

Example 6

5-(2,6-dimethylmorpholino)pentyl-4-trifluoromethylphenyldimethylsilane

The procedure of Example 3 was repeated except that 2,6-dimethylmorpholine was used in place of piperidine to obtain 5-(2,6-dimethylmorpholino)pentyl-4-trifluoromethylphenyldimethylsilane. Yield: 90%.

The results of analysis on this compound are given below.

MASS(m/e) 378($M^+$),372,314,203(base)

$^1$H-NMR($CDCl_3$, δ, ppm)

0.27(6H,m),0.76(2H,m),1.14(6H,d,J=6.4Hz), 1.31(4H,m),1.45(2H,m),1.66(2H,t,J=11Hz), 2.25(2H,m),2.71(2H, d,J=11Hz),3.67(2H,m)7.59(4H,m)

$^{13}$C-NMR($CDCl_3$, δ, ppm)

-3.235,15.354,19.169,23.669,26.138,31.271,58.628, 59.621,71.608,124.140,124.190,133.773,144.586

The compounds obtained in Examples 1, 2, 3, 4, 5 and 6 above are hereinafter referred to as Compounds I, II, III, IV, V and VI, respectively.

Test 1 Test for inhibition of plumules and suckers

Ten parts by weight of each of compounds I to VI, 5 parts by weight of Triton B (N-benzyltrimethylammonium hydroxide) and 85 parts by weight of xylene were mixed uniformly to prepare a 10% emulsifiable concentrate, which was then diluted with water to prepare an emulsion with 500 ppm concentration. Thus, six emulsions were obtained and tested for inhibition effect of elongation of plumules and sucker.

A soy bean (variety: TSURUNOKO) was planted in pots with a diameter of 7 cm singly per hill, and cultivated in a glasshouse. When the third leaf developed, the emulsion was uniformly applied in an amount of 20 ml per 4 soy bean plant bodies. Two weeks after the application, the fourth leaf and the portions there above which grew after the application and the suckers were all detached, and the total fresh weight of the detached portions from 4 individuals of each compound was measured. The fresh weight was also measured for phonts to which no chemical was applied. The weight ratio of the fresh weight in each case where a emulsion was applied to that in the case of no application was calculated, and classified into four ranks as below.

A: Less than 10%

B: 10% or more but less than 30%

C: 30% or more less than 60%

D: 60% or more

The results are given in Table 1.

Table 1

| Compound No. | Name | Rank |
|---|---|---|
| I | 5-piperidinopentyl-4-chlorophenyldimethylsilane | A |
| II | 5-(1-pyrrolidinyl)pentyl-4-chlorophenyldimethylsilane | A |
| III | 5-piperidinopentyl-4-trifluoromethylphenyldimethylsilane | A |
| IV | 5-(1-pyrrolidinyl)pentyl-4-trifluoromethylphenyldimethylsilane | A |
| V | 5-(1-perhydroazepinyl)pentyl-4-trifluoromethylphenyldimethylsilane | A |
| VI | 5-(2,6-dimethylmorpholinopentyl)-4-trifluoromethylphenyldimethylsilane | A |

Test 2

The effect of inhibiting the growth of suckers was tested using a tobacco plant, variety: HAKUENSHU. The tobacco was cultivated on a field as conventionnally, and topping was carried out at flowering time in the conventional manner. The suckers that had grown to a length of 5 cm or longer by the time of the topping were also picked simultaneously. At that day, Compound I was applied as below.

For the application, the 10% emulsifiable concentrate as prepared in Test 1 was diluted with water to the concentrations of 5,000 ppm and 2,000 ppm, each of which was tested. Each of the liquids thus prepared was applied to plants from above in an amount of 30 ml per hill. Twenty (20) days after the application, the suckers that had grown to a length of 5 cm or longer were picked off from 10 individuals, and the average sucker number and the average sucker length per individual were obtained. Further, the ratio of the average sucker length in each case to that in the case of no application of chemicals, was calculated.

For comparison, maleic hydrazide (tradename: O-MH),which had been used for the same purpose was diluted with water to 500 ppm and then tested in the same manner, as a control.

The results are given in Table 2, and show that the compound of the present invention is superior to the control in inhibition effect.

Table 2

| | After 20 days | | After 30 days | |
|---|---|---|---|---|
| | Average sucker number | Ratio of sucker length(%) | Average sucker number | Ratio of sucker length(%) |
| Compound I, 5,000 ppm | 0.0 | 0.0 | 2.0 | 12.4 |
| Compound I, 2,000 ppm | 0.0 | 0.0 | 3.9 | 32.1 |
| Control, 5,000 ppm | 3.6 | 25.9 | 5.1 | 28.9 |
| No Application | 5.7 | 100.0 (33.8cm) | 6.4 | 100.0 (53.2cm) |

Test 3

The effect of shedding flower buds was tested using a tobacco plant, variety: HAKUENSHU. The tobacco was cultivated on a field as conventionally. When flower buds begin to appear, Compound I was applied as below.

For the application, the 10% emulsifiable concentrate as prepared in Test 1 was diluted with water to the concentrations of 5,000 ppm and 2,000 ppm, each of which was tested. Each of the liquids thus prepared was applied to plants from above in an amount of 30 ml per individual. When seed-setting was completed after the flowering time, the average number of seed setting of 10 individuals was examined. The ratio of the average number of seed-setting in each case to that in the case of no application of chemicals, was calculated.

The results are given in Table 3.

Table 3

| Conditions | Seed-setting ratio(%) |
|---|---|
| Compound I, 5,000ppm | 10.4 |
| Compound I, 2,000ppm | 32.7 |
| No application | 100.0 (87.4 fruits/hill) |

As shown in Table 3, the application of the compound of the present invention promote flower bud shedding and lowered largely seed-setting ratio. In the test above, no control for comparison was tested because no chemical used for such a purpose is known.

Test 4

The effect of shedding flower buds and influence exerted on fruits which had been developed at the time of application of a compound of the present invention, were tested using a tomato plant. The tomato was cultivated on a field as conventionally. When flowers bloomed and flowers developed into fruit, Compound I was applied as below.

For the application, the 10% emulsifiable concentrate as prepared in Test 1 was diluted with water to the concentration of 1,000 ppm, and the diluted liquid was applied to plants from above in an amount of 20 liters per 100 $m^2$. For comparison, no application of chemicals was conducted for control plants.

With respect to the plants to which the application was conducted and the plants to which no application

was conducted, fifty (50) individuals were selected from each of (1) fruits that had been flowers or flower buds, (2) fruits that had been young fruits with a diameter of 5 to 10 mm, and (3) fruits that had thickened to be fruits with a diameter of 40 to 50 mm, when the application was conducted. When fruits of the plants to which no application was conducted began to be colored, the selected fruits were harvested at the same time, and average fruit weight and coloring state were examined.

The results are given in Table 4.

Table 4

| State at the time of application | Results at the time of harvest | | |
|---|---|---|---|
| | (A)* | (B)** ((B)/(A) ratio) | Colouring state where no application was made |
| Flowers or Flower buds | 158g | 0: All fruits shed (0.0%) | No fruits produced |
| Fruits with a diameter 5 to 10 mm | 151g | 170g (112.4%) | Colouring was advanced by 3-5 days |
| Fruits with a diameter 40 to 50 mm | 162g | 170g (105.0%) | Colouring was advanced by 2-3 days |

Remarks:
* (A): Fruit weight where no application was made
** (B): Fruit weight where application was made

As apparent from Table 4, by application of the compound of the present invention, all the flowers and flower buds shed, however, the thickening of the young fruits which had been already formed was promoted, and coloring was advanced as compared with the case where no application was conducted.

Test 5

The effect of promoting the ripening of fruits was tested using a kaki (Japanese persimon; Variety: FUYU). The kaki was cultivated on a field as conventionally. When fruits began to color, Compound I was applied as below.

For the application, the 10% emulsifiable concentrate as prepared in Test 1 was diluted with water to the concentrations of 1,000 ppm and 200 ppm, each of which was used for testing. The diluted liquid was applied uniformly onto a branch on which 10 to 15 fruits were formed. One month after the application, the fruits were all harvested at the same time. The average weight, Brix and firmness of the fruits were examined. For comparison, no application of chemicals was conducted for control plants, and a similar examination was conducted.

The results are given in Table 5.

Table 5

| | Compound I 1,000ppm | Compound I 200ppm | No application |
|---|---|---|---|
| Fruit weight (g) | 148.00 | 151.30 | 145.00 |
| Brix (%) | 15.40 | 15.10 | 14.30 |
| Firmness (kg) | 2.99 | 3.09 | 3.12 |

It was observed that the application of the compound of the present invention increased the Brix and lowered the firmness of fruits, indicating that the ripening of the fruits was definitely promoted. However, no influence on the weight or fruits was observed, and any adverse influence on thicknening growth was not observed, either.

## Claims

1. A cyclic aminoalkylsilane having the general formula (1):

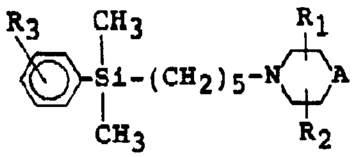

(1)

wherein $R_1$ and $R_2$ may be the same or different and each are a hydrogen atom or a methyl group, $R_3$ is a chlorine atom or a trifluoromethyl group, A stands for $-CH_2-$,$-CH_2CH_2-$, $-CH(CH_3)-$, -O- or a single bond.

2. The cyclic aminoalkylsilane of Claim 1, wherein the substituted phenyl group bonded to the silicon atom in the general formula (1) is p-chlorophenyl, m-chlorophenyl, p-trifluoromethylphenyl, m-trifluoromethylphenyl, or o-trifluoromethylphenyl.

3. The cyclic aminoalkylsilane of Claim 1, wherein the cyclic amino group bonded to the silicon atom in the general formula (1) is piperidino group, 2-methylpiperidino group, 3-methylpiperidino group, 4-methylpiperidino group, 2,6-dimethylpiperidino group, 3,5-dimethylpiperidino group, 1-pyrrolidinyl group, 2-methyl-1-pyrrolidinyl group, 3-methyl-1-pyrrolidinyl group, 1-perhydroazepinyl group, morpholino group, or 2,6-dimethylmorpholino group.

4. The cyclic aminoalkylsilane of Claim 1 which is 5-piperidinopentyl-4-chlorophenyldimethylsilane, 5-(1-pyrrolidinyl) pentyl-4-chlorophenyldimethylsilane,5-piperidinopentyl-4-trifluoromethylphenyldimethylsilane, 5-(1-pyrrolidinyl) pentyl-4-trifluoromethylphenyldimethylsilane, 5-(1-perhydroazepinyl) pentyl-4-trifluoromethylphenyldimethylsilane or 5-(2,6-dimethylmorpholinopentyl)-4-trifluoromethylphenyldimethylsilane.

5. A process for producing the cyclic aminoalkylsilane as defined in Claim 1, comprising the step of reacting a compound represented by the general formula (2):

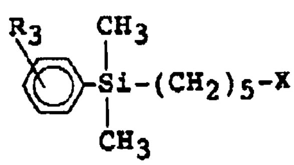

(2)

wherein $R_3$ is as defined above, and X is a halogen atom or a slfonyloxy group represented by the formula:$R'SO_3$-where R′ stands for a methyl group, p-tolyl group or trifluoromethyl group, with a cyclic amine having the general formula (3):

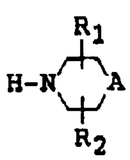

(3)

wherein $R_1$, $R_2$ and A are an defined above.

6. The process of Claim 5, wherein in the general formula (2) the cyclic amino group bonded to the silicon atom is piperidino group, 2-methylpiperidino group, 3-methylpiperidino group, 4-methylpiperidino group,

2,6-dimethylpiperidino group, 3,5-dimethylpiperidino group, 1-pyrrolidinyl group, 2-methyl-1-pyrrolidinyl group, 3-methyl-1-pyrrolidinyl group, 1-perhydroazepinyl group, morpholino group, or 2,6-dimethylmorpholino group, and X is a chlorine atom or a bromine atom.

7. A plant growth regulator comprising the cyclic aminoalkylsilane having the general formula (1) as defined in Claim 1 as an active ingredient.

European Patent Office

# EUROPEAN SEARCH REPORT

Application Number

EP 92 30 2863

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CHEMICAL ABSTRACTS, vol. 114, 1991, Columbus, Ohio, US; abstract no. 164490H, YOSHIOKA, H. ET AL: 'PREPARATION OF ORGANOSILICON COMPOUNDS' page 805 ; * abstract * & JP-A-02 270 889 (SHIN-ETSU CHEMICAL INDUSTRY CO., LTD.) --- | 1-7 | C07F7/08<br>A01N55/00 |
| D,A | EP-A-0 313 353 (THE DOW CHEMICAL COMPANY; M&T CHEMICALS, INC.) * the whole document * --- | 1,7 | |
| A | CHEMICAL ABSTRACTS, vol. 89, 1978, Columbus, Ohio, US; abstract no. 146967E, LUKEVICS, E. ET AL: 'NITROGEN-CONTAINING ORGANOSILICON COMPOUNDS LXXXI. SYNTHESIS AND FUNGICIDAL ACTIVITY OF 3-AMINOPROPYLSILANES' page 618 ; * abstract * & LATV. PSR ZINAT. AKAD. VESTIS, KIM. SER. no. 3, 1978, pages 343 - 349; --- | 1,7 | TECHNICAL FIELDS SEARCHED (Int. Cl.5)<br>C07F<br>A01N |
| A | EP-A-0 093 274 (BASF AG) * the whole document * ----- | 1,7 | |

The present search report has been drawn up for all claims

| Place of search | Date of completion of the search | Examiner |
|---|---|---|
| THE HAGUE | 18 JUNE 1992 | RINKEL L.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)